(19) **Europäisches Patentamt**

**European Patent Office**

**Office européen des brevets**

(11) **EP 1 509 017 A2**

(12) **EUROPEAN PATENT APPLICATION**

(43) Date of publication:
**23.02.2005 Bulletin 2005/08**

(51) Int Cl.$^7$: **H04L 27/36**, H04B 3/04,
**H04L 25/03**

(21) Application number: **04012339.0**

(22) Date of filing: **25.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **22.08.2003 JP 2003299108**

(71) Applicant: **MATSUSHITA ELECTRIC INDUSTRIAL
CO., LTD.
Kadoma-shi, Osaka 571-8501 (JP)**

(72) Inventors:
• **Noma, Nobuhiko
Yokohama-shi Kanagawa 227-0033 (JP)**

• **Takagi, Genzo
Ageo-shi Saitama 362-0047 (JP)**
• **Nagai, Motoyoshi
Yokohama-shi Kanagawa 247-0008 (JP)**
• **Araki, Mitsuhiro
Kiyose-shi Tokyo 204-0023 (JP)**
• **Atsuta, Akira
Tokyo 153-0064 (JP)**

(74) Representative: **Grünecker, Kinkeldey,
Stockmair & Schwanhäusser Anwaltssozietät
Maximilianstrasse 58
80538 München (DE)**

(54) **DSL modem apparatus and communication control method**

(57) A processor executes an initialization sequence that exchanges predetermined signals prior to data communication. A complex operation circuit multiplies transmission data of a sub-carrier by gain compensation data and phase angle compensation data, which are prepared for the same sub-carrier. Therefore, modulation is done so that the multiplication results are simultaneously transmitted, by an IFFT unit, in a plurality of sub-carriers. In addition, the transmission data of a sub-carrier, during the data communication, is multiplied by gain compensation data and phase angle compensation data, which are prepared for the same sub-carrier.

**Fig.10**

**Description**

BACKGROUND OF THE INVENTION

1. Field of the Invention

The present invention relates to a DSL modem apparatus and a communication control method that can be applied to digital communication using a metallic cable.

2. Description of Related Art

xDSL that uses established telephone lines performs high-speed communication using high frequency signals, although there is a limitation of the communication distance. Since the high frequency signals have high attenuation rates, various measures have been taken to reduce the factors that prevent the xDSL communication distance from increasing. For example, a gain control is performed based on reception energy of a C-REVERB signal, in order to increase the signal energy of the transmission signal, thereby overcoming the signal deterioration (e.g., Related Art 1).

[Related Art]

Japanese Patent Laid Open Application 2003-008536

However, when a plurality of carriers (sub-carriers) are used in a frequency band that has a wide width (e.g., DMT (discrete multi tone) method), individual amplitude and phase angles change for each sub-carrier. Thus, even if signal energy of all sub-carriers is uniformly raised, it is impossible to accurately communicate the amplitude and phase angles for each sub-carrier. Further, when the communication distance becomes long, it is difficult for the reception side to capture the signal, the signal having been roughly adjusted by the conventional gain control.

SUMMARY OF THE INVENTION

The present invention is addresses the above-described problem. The purpose of the invention is to provide a DSL modem apparatus and a communication control method that can accurately communicate, to the reception side, the amplitude and phase angles of the transmission data transmitted by each sub-carrier, and can extend the communication distance.
According to the present invention, an initialization sequence that exchanges a predetermined signal prior to the data communication is executed. The transmission data of a sub-carrier is multiplied by gain compensation data and phase angle compensation data, which are prepared for the same sub-carrier. Therefore, modulation is done so that the multiplication results are simultaneously transmitted by a plurality of sub-carriers.

In addition, during the data transmission, the transmission data of a sub-carrier is multiplied by gain compensation data and phase angle compensation data, which are prepared for the same sub-carrier. Therefore, modulation is done so that a plurality of transmission data units can be simultaneously transmitted by the plurality of sub-carriers.

BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:

Fig. 1 is a schematic diagram of a communication system according to an embodiment of the present invention;
Fig. 2 is a functional block diagram of a transceiver shown in Fig. 1;
Fig. 3 illustrates a table configuration of gain compensation data and phase angle compensation data at a 1 km line;
Fig. 4 illustrates a table configuration of gain compensation data and phase angle compensation data at a 5 km line;
Fig. 5 illustrates amplitude attenuation and phase angle shift at a 1 km line;
Fig. 6 illustrates amplitude attenuation and phase angle shift at a 5 km line;
Fig. 7 is a illustrates amplitude attenuation and phase angle shift at a 1 km line, corresponding to Fig. 5, in a sub-carrier unit;
Fig. 8 is a illustrates amplitude attenuation and phase angle shift at a 5 km line, corresponding to Fig. 6, in a sub-carrier unit;
Fig. 9 is a sequence chart illustrating a handshake sequence and a first half of an initialization sequence; and
Fig. 10 illustrates a partial configuration where complex operation circuit is located.

DETAILED DESCRIPTION OF PREFERRED EMBODIMENTS

The embodiments of the present invention are explained in the following, in reference to the above-described drawings.

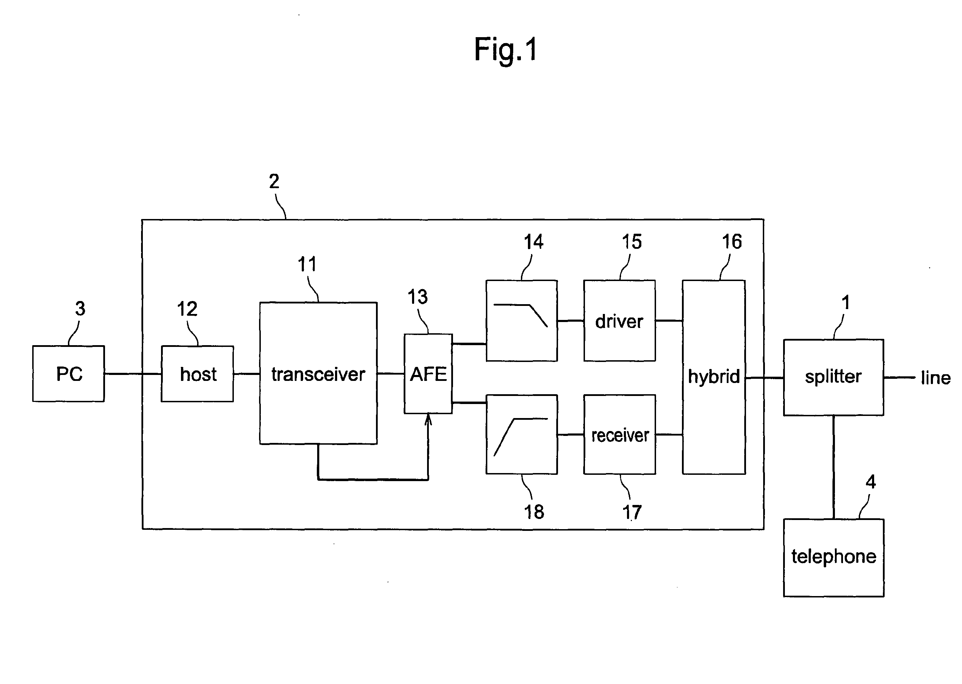

Fig. 1 illustrates a schematic configuration of a communication system of an ATU-R side, to which the present invention is applied. In the communication system as illustrated in Fig. 1, a public phone line or a similar phone line (hereafter referred to as line) is connected to ADSL modem apparatus 2 via splitter 1. Further, user terminal 3 is connected to ADSL modem apparatus 2.

When user terminal 3 and telephone 4 share one line, splitter 1 is necessary. However, when telephone 4 is not used, splitter 1 is not needed. It is also possible to have a configuration where user terminal 3 internally installs ADSL modem apparatus 2.

ADSL modem apparatus 2 includes transceiver 11 that executes ADSL communication, and host 12 that controls the entire operation including the one of transceiver 11. At the line side of transceiver 11, units are configured with an analog circuit via analog front end (hereafter referred to as AFE) 13. Driver 15 is connected to a DA converter of AFE 13 via analog filter 14, so that an analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

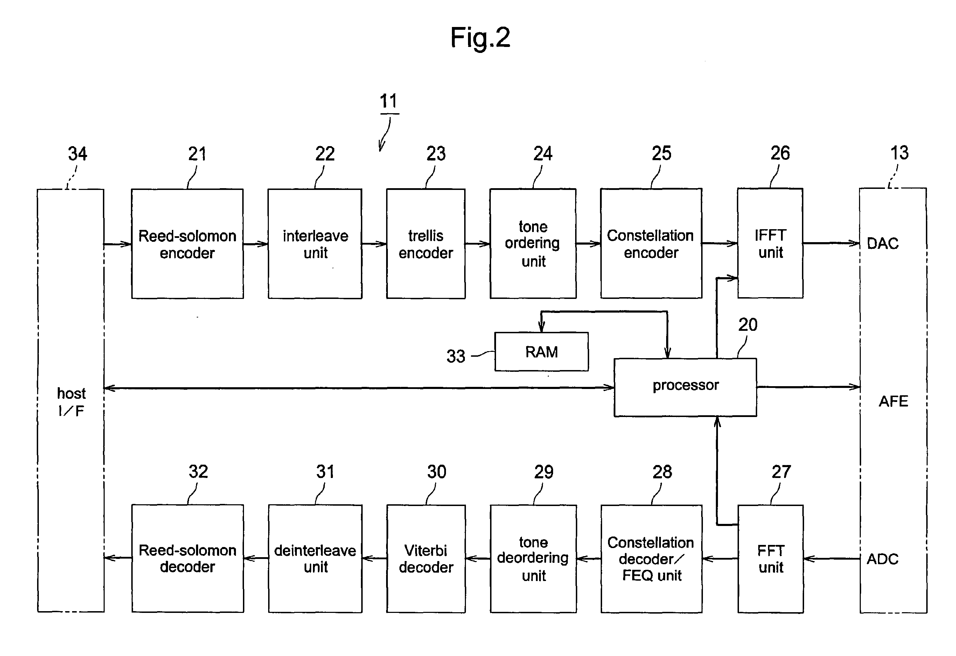

Fig. 2 is a functional block diagram illustrating transceiver 11. Processor 20 has functions to execute handshake and initialization sequences and to control communication during data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, trellis encoder 23 that performs data convolution from a trellis encoding, tone ordering unit 24 that lays out a bit number for each carrier, constellation encoder 25 that allocates phase of the transmission data on constellation coordinates, and IFFT unit 26 that performs an Inverse Fast Fourier Transform (hereafter referred to as IFFT) on data after the constellation encoding process.

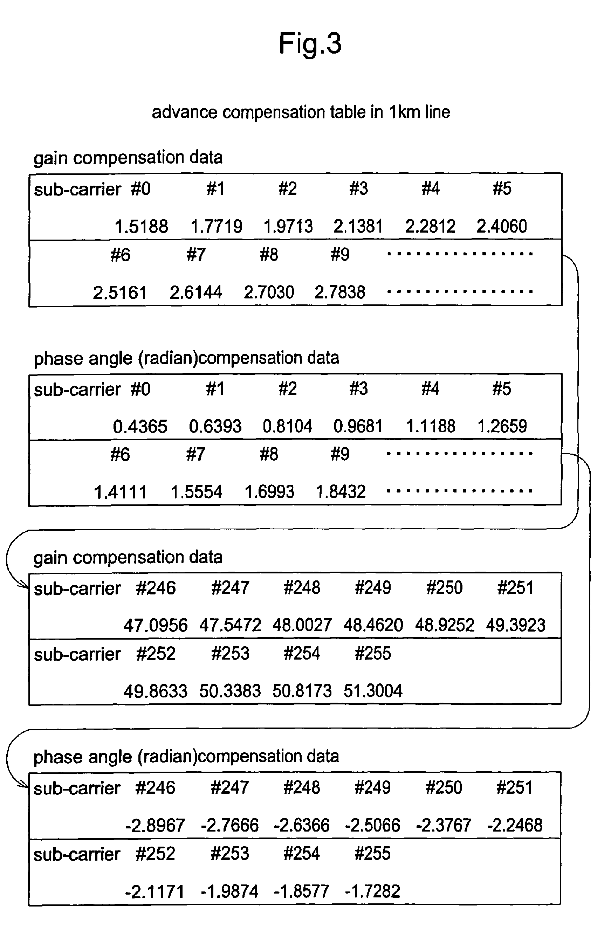

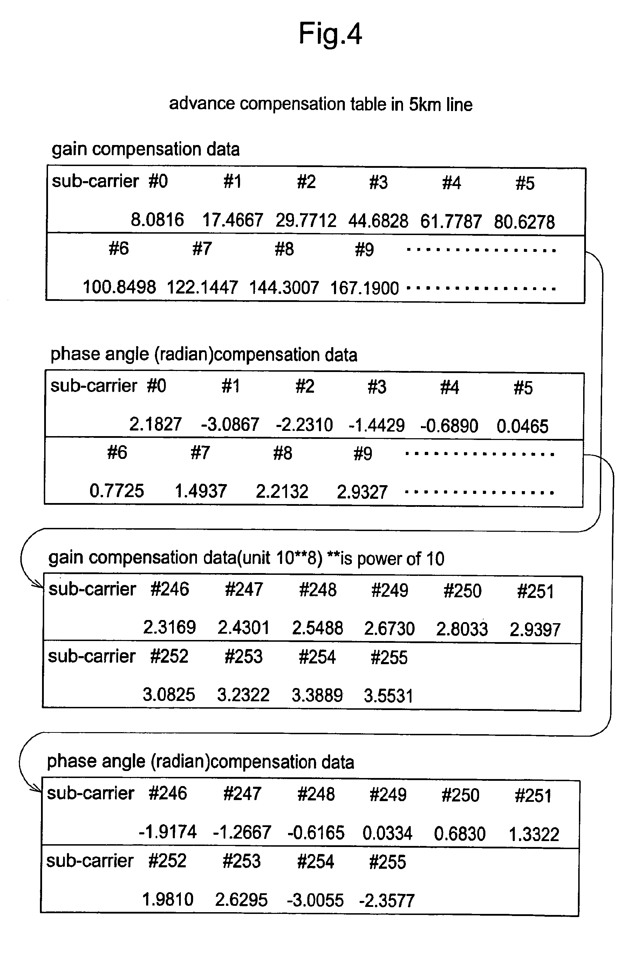

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a phase on the constellation coordinates, tone de-ordering unit 29 that restores data assigned to each carrier after tone ordering process at the transmission side, Viterbi decoder 30 that performs Viterbi decoding on the received data, de-interleave unit 31 that restores data being rearranged by the transmission side, and Reed-Solomon decoder 32 that deletes the redundancy bit added by the transmission side. RAM 33 is a work area of processor 20, which will be used for executing handshake and initialization sequences. Also, RAM 33 stores an advance compensation table shown in Figs. 3 and 4. Transceiver 11 is connected to host 12 via host interface (I/F) 34.

In the advance compensation table shown in Fig. 3, the advance compensation data (gain compensation data and phase angle compensation data), prepared for a situation where the distance between ATU-C and ATU-R is around 1 km, is set for each index number.

In particular, gain compensation data and phase angle compensation data are set in order to compensate the amplitude attenuation and phase angle shift respectively, at a point where transmission data of gain 1.0 and phase angle 0 (radian) has been transmitted 1 km. Similarly, the advance compensation table shown in Fig. 4 sets the gain compensation data and phase angle compensation data, prepared for a situation where the distance between ATU-C and ATU-R is around 5 km. In particular, gain compensation data and phase angle compensation data is set in order to compensate the amplitude attenuation and phase angle shift respectively, at a point where transmission data of gain 1.0 and phase angle 0 (radian) has been transmitted 5 km.

An ADSL modem apparatus of the center side is connected to ADSL modem apparatus 2 via a metallic cable. The ADSL modem apparatus of the center side has the same configuration as ADSL modem apparatus 2. When the center side is an exchange provided by a communication industry, telephone 4 does not exist.

The following describes, in detail, the operation of the above-described embodiment. During the initialization sequence, processor 20 performs an advance compensation process by retrieving the gain compensation data and phase angle compensation data from the advance compensation table, and multiplying the transmission data by the retrieved data.

First, the illustration of the basic concept is provided for phase angle shifting and amplitude attenuation of a REVERB signal, as well as the advance compensation process that compensates the REVERB signal at the transmission data stage, prior to the signal transmission.

For example, G.dmt positions 256 sub-carriers in 4.3125 kHz intervals. The first 26 sub-carriers, starting from the lowest frequency, are used for the upstream line, and the other 233 sub-carriers are used for the downstream line. In case of G.dmt, the frequency band of 25 kHz to 1.1 MHz is used. Therefore, the remaining 7 sub-carriers that are in the frequency band below 25kHz are not used. Depending on the frequency band, the amplitude attenuation rate (G) and phase delay (θ) may vary.

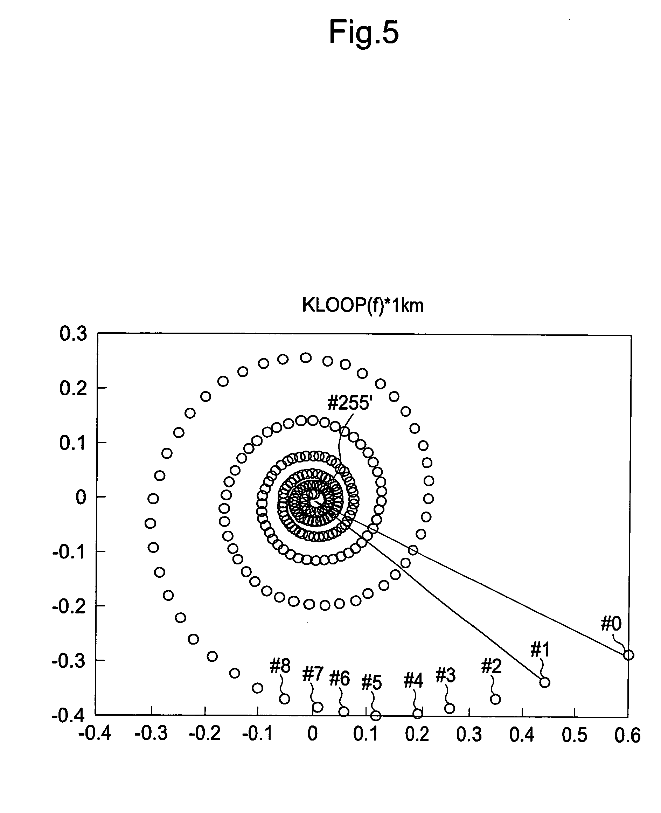

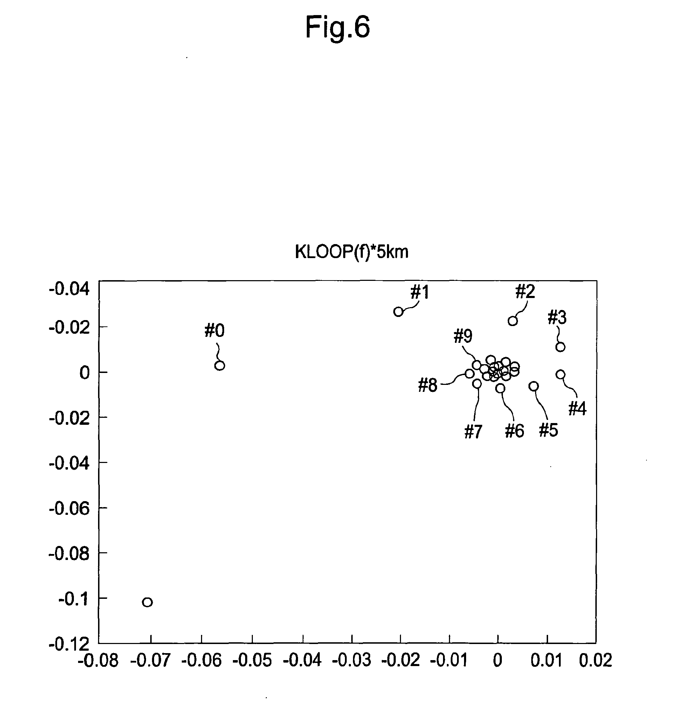

Fig. 5 illustrates amplitude attenuation and phase angle shift for individual 256 sub-carriers. Each sub-carrier has an index number starting from the one having the lowest frequency. "#" represents an index. Fig. 5 illustrates a result of a simulation when the distance between ATU-C and ATU-R is set at 1 km. As shown in Fig. 5, as the index number (i.e., higher the frequency) becomes high, both the amplitude attenuation amount and the phase angle shift become larger. In addition, Fig. 6 illustrates a result of a simulation when the distance between ATU-C and ATU-R is set at 5 km. Compared to the 1 km distance between ATU-C and ATU-R, the amounts of amplitude attenuation and phase angle shift are different.

The above amplitude attenuation and phase angle shift can be illustrated in the following numerical formula. When the transmission data (x0, y0) is received as reception data (x1, y1), the conversion can be illustrated as numerical formula (1). "θ" represents phase delay, and "G" represents amplitude attenuation.

## Numerical Formula (1)

$$\begin{bmatrix} x1 \\ y1 \end{bmatrix} = G \times \begin{bmatrix} \cos\theta & -\sin\theta \\ \sin\theta & \cos\theta \end{bmatrix} \begin{bmatrix} x0 \\ y0 \end{bmatrix}$$

Accordingly, when the amplitude of the transmission data is increased for the amplitude attenuation amount and the phase of the transmission data is rotated in the reverse direction for the phase delay in advance, the reception data, after amplitude attenuation and phase angle shift, should have the amplitude and phase angle data identical with the original data prior to the advance compensation. In other words, as shown in numerical formula (2), by multiplying both sides of numerical formula (1) by inverse matrix of G (amplitude attenuation at the line) and of determinant (illustrating phase angle shift "θ"), transmission data (x0, y0) can be obtained. The data has the amplitude increased by the amplitude attenuation amount, and the phase is rotated in the reverse direction by the phase delay. The reception data (x1, y1), shown in the right side of the numerical formula (2) is a reception data at 0 km distance, having a gain of 1.0 and a phase angle shift of 0. According to the distance, each sub-carrier has different amplitude attenuation "G" and phase angle shift "θ".

## Numerical Formula (2)

$$\begin{bmatrix} x0 \\ y0 \end{bmatrix} = \frac{1}{G} \begin{bmatrix} \cos\theta & \sin\theta \\ -\sin\theta & \cos\theta \end{bmatrix} \begin{bmatrix} x1 \\ y1 \end{bmatrix}$$

In the present invention, in numerical formula (1), the transmission data is multiplied by "G" (gain compensation data) and "θ" (phase angle compensation data). The above determinant calculation was provided for the simplicity of the illustration. However, the actual calculation is performed using complex operation, as the advance compensation process that prepares the data in the complex number format.

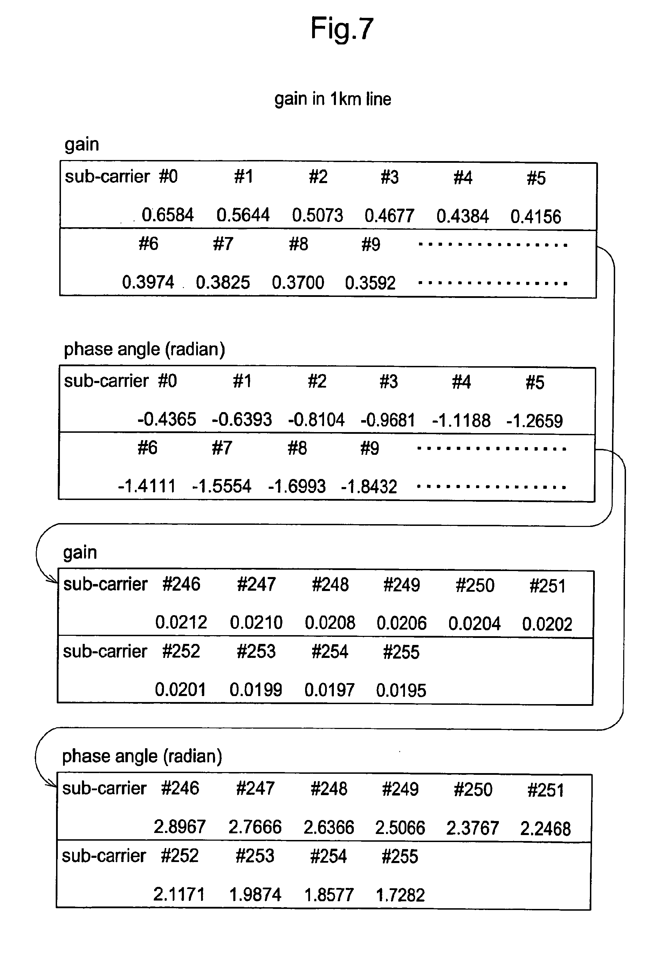

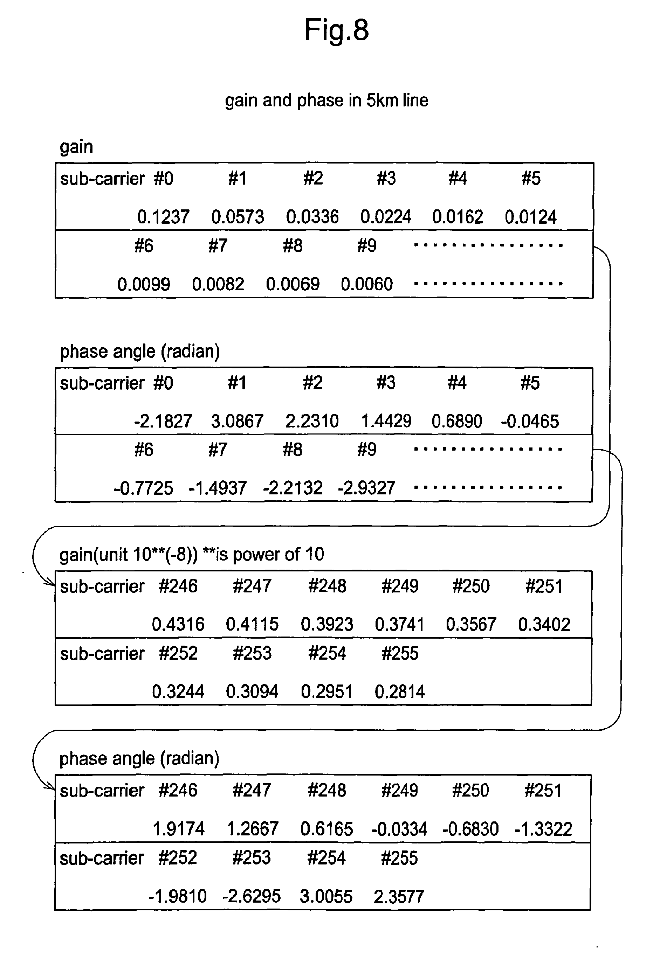

Fig. 7 illustrates the amplitude attenuation and phase delay of the reception data in sub-carrier unit, when the distance between ATU-C and ATU-R is 1 km. Fig. 8 illustrates the amplitude attenuation and phase delay of the reception data, when the distance is changed to 5 km. Based on Figs. 7 and 8, amplitude attenuation (G) and phase angle shift (θ) of the reception data can be obtained, as simulation values, for each sub-carrier (#). The advance compensation table of Fig. 3 is generated by multiplying the amplitude attenuation (G) and phase angle shift (θ) (which are calculated for each sub-carrier), from the simulation values of Fig. 7, by the reception data at distance 0 km (gain 1.0 and phase angle shift 0). Similarly, the advance compensation table of Fig. 4 is generated by multiplying the amplitude attenuation (G) and phase angle shift (θ) (which are calculated for each sub-carrier), from the simulation values of Fig. 8, by the reception data at distance 0 km (gain 1.0 and phase angle shift 0).

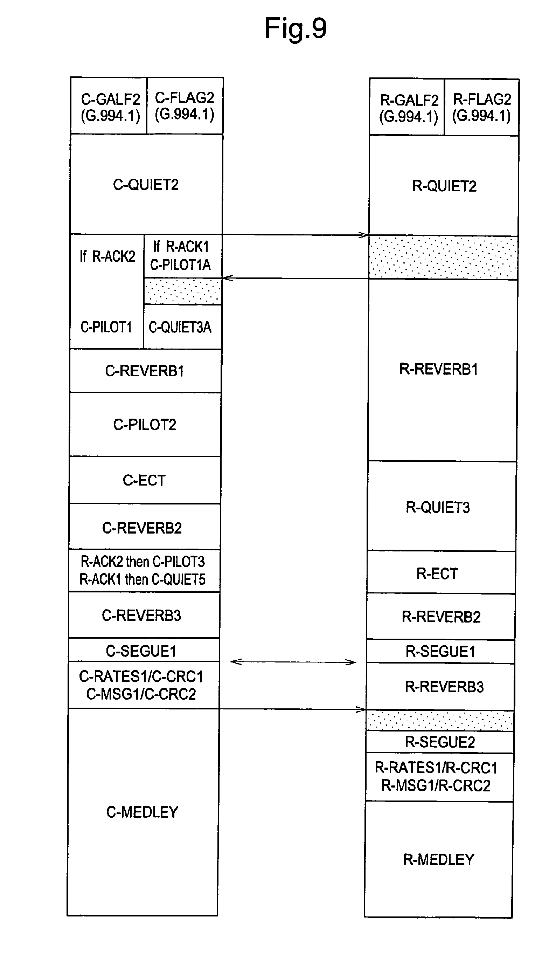

Next, the sequence chart of Fig. 9 is used to illustrate which signal has the advance compensation process during the real communication sequence.

ATU-C and ATU-R perform a handshake sequence based on G.994.1 in order to select a mode. In the example shown in Fig. 9, G.dmt is selected as the mode for the initialization sequence.

Upon starting the initialization sequence, ATU-C uses indexes #64 and #48 to transmit C-PILOT signal or C-PILOT 1A signal.

ATU-R, upon starting the initialization sequence and detecting the signal energy at indexes #64 and #48, performs a hyperframe synchronization process based on the PILOT signal. Upon establishing the hyperframe synchronization, ATU-R transmits a R-REVERB1 signal.

At this time, ATU-R performs the multiplication on the R-REVERB 1 signal, by gain compensation data and phase angle compensation data, in order to convert the signal into transmission data that has advance gain compensation and phase angle compensation. Hereafter, the detail illustration is provided. The handshake and initialization sequences are initiated when processor 20, having captured an FFT output from FFT unit 27, inputs transmission data into IFFT unit 26. When the distance between ATU-C and ATU-R is around 1 km, the advance compensation table of Fig. 3 is used. Processor 20 generates a R-REVERB 1 signal for each sub-carrier (26 total), and multiplies each R-REVERB 1 signal by gain compensation data and phase angel compensation data corresponding to the index number. As a result, R-REVERB 1 signal has advance compensation per index unit.

The R-REVERB1 signal after having the advance compensation has the reverse Fourier conversion by IFFT unit 26, and is converted into an analog signal by AFE 13. Then, the R-REVERB 1 signal arrives at ATU-C via the line. When passing through the line, the R-REVERB 1 signal becomes affected by the amplitude attenuation and phase angel shift. However, because of the advance compensation, the transmission data shows the original amplitude and phase angle, after being affected by the amplitude attenuation and phase angle shift.

Accordingly, processor 20 of ATU-C can obtain the R-REVERB1 signal having no (or a minimum degree of) amplitude attenuation and phase angle shift. Because processor 20 can obtain the R-REVERB 1 signal having no or minimum distortion, it is possible to prevent error, which makes it impossible to capture the signal. Similarly, it is possible to establish symbol synchronization with the remote side.

In addition, upon detecting the R-REVERB 1 signal, the ATU-C transmits a C-REVERB 1 signal to the remote side. ATU-C performs the same advance compensation process on the C-REVERB 1 signal as the remote side. In other words, processor 20 generates a C-REVERB1 signal for each sub-carrier (256 max.), and multiplies each C-REVERB 1 signal by the gain compensation data and phase angle compensation data for the corresponding index number. The C-REVERB1 signal, after being advance-compensated, has the reverse Fourier conversion by IFFT unit 26, and is converted into an analog signal by AFE 13 prior to its transmission. Then, the C-REVERB 1 signal arrives at ATU-R via the line. When passing through the line, the C-REVERB 1 signal becomes affected by the amplitude attenuation and phase angel shift. However, because of the advance compensation, the transmission data shows the original amplitude and phase angle, after being affected by the amplitude attenuation and phase angle shift. Accordingly, processor 20 of ATU-R can obtain the C-REVERB 1 signal having no or minimum distortion, thereby making it possible to securely capture the signal prior to establishing the symbol synchronization. Then, the symbol synchronization can be securely established based on the captured C-REVERB signal, without causing errors.

When the distance between ATU-C and ATU-R is around 5 km, the advance compensation table of Fig. 4 is used. The advance compensation process at ATU-C and ATU-R is similar to the case that uses the advance compensation table of Fig. 3. As described above, when the distance is changed, the amplitude attenuation and the phase angle shift is different in the reception data. When the distance is around 5 km, a distortion that is different from the one of 1 km is seen in the reception signal. Therefore, the advance compensation in accordance with the distance is needed. When the distance between ATU-C and ATU-R is around 5 km, by using the advance compensation table of Fig. 4, it is possible to perform advance compensation according to the amplitude attenuation and phase angle shift received in the real line (5 km).

When the advance compensation is performed on the R-REVERB 1 signal and C-REVERB 1, various signals exchanged during the initialization sequence (R-REVERB2, R-REVERB3, R-MEDLEY, C-REVERB2, C-REVERB3, C-MEDLEY, etc.) are transmitted without the advance compensation process.

This is because the errors are likely to be caused due to the signal distortion from the amplitude attenuation and phase angle shift, until the symbol synchronization is established based on the C-REVERB 1 signal and R-REVERB 1 signal. However, after establishing the symbol synchronization of the REVERB 1 signals, it becomes easy to capture the signal even with the existence of the amplitude attenuation and phase angle shift.

Upon completing the initialization, data communication (SHOWTIME) is started. Fig. 9 illustrates the handshake sequence and the first half of the initialization sequence.

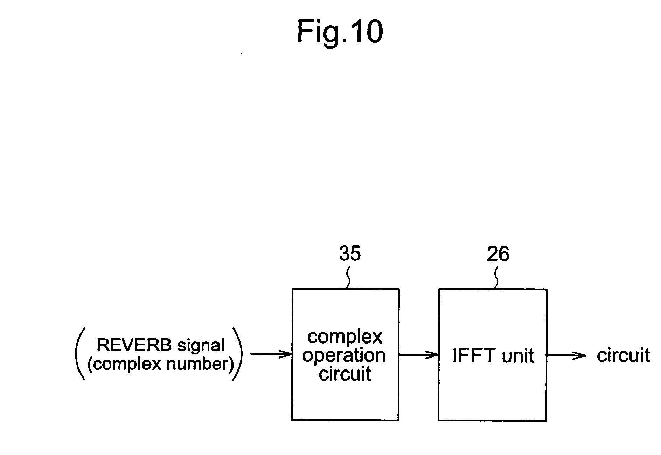

The above illustration used an example where processor 20 multiplies the C-REVERB 1 signal and R-REVERB 1 signal by the gain compensation data and phase angel compensation data. However, it is preferable that, as shown in Fig. 10, complex operation circuit 35 can be set in the input section of IFFT unit 26, so that complex operation circuit 35 performs the multiplication of the gain compensation data and phase angle compensation data. The gain compensation data and phase angle compensation data (used by complex operation circuit 35 for the multiplication) is set as complex numbers in accordance with the C-REVERB 1 signal and R-REVERB 1 signal. In addition, it is possible to provide a configuration where gain compensation data and phase angel compensation data of different distances can be used as the complex multiplication coefficients. For example, the above data in the complex operation circuit can be rewritten, by the CPU, according to different communication distances such as 1 km, 2km, and 5km. In this case, the CPU can, by confirming the distance between ATU-C and ATU-R, set the appropriate gain compensation data and phase angel compensation data as the complex multiplication coefficients in the complex operation circuit. It is also possible for complex operation circuit 35 to have the data in advance for each distance in a parallel configuration. In this case, the predetermined data can be obtained by switching the complex operation circuit for each distance.

In addition, when the transmission data has the advance compensation process, the data is processed by complex operation circuit 35. However, in other cases, the flow of the signal needs to be controlled so that the transmission data is input to IFFT unit 26, without being processed by complex operation circuit 35.

In addition, the above illustration used an example where the advance compensation is performed by multiplying only C-REVERB1 signal and R-REVERB1 signal by the gain compensation data and phase angle compensation data. However, a similar advance compensation process can be performed on an arbitrary signal or all signals during the handshake and initialization sequences.

Having the advance compensation process performed on all signals is effective when there is a long distance between ATU-C and ATU-R (e.g., 5 km or more), where the amplitude attenuation and phase angle shift are large.

The following describes the contents during the SHOWTIME. During the SHOWTIME, as described above, the transmission data is first converted into constellation data by constellation encoder 25, and is input to IFFT unit 26. Because of a long distance between ATU-C and ATU-R, when there is a large attenuation and phase angle shift of the transmission data transmitted during the SHOWTIME, it is effective to perform the advance compensation on all of the transmission data, during the SHOWTIME, by multiplying the gain compensation data and phase angle compensation data. In other cases, the data should be input to IFFT unit 26 without the advance compensation.

When the advance compensation process is performed on the transmission data during the SHOWTIME, complex operation circuit 35 is positioned before IFFT unit 26. When constellation data output from constellation encoder 25 (i.e., transmission data illustrated with complex number) is input to complex operation circuit 35, the transmission data is multiplied by the gain compensation data and phase angle compensation data for each sub-carrier. Then, the advance-compensated transmission data, on its amplitude and phase angle, is input to IFFT unit 26, processed by the reverse Fourier conversion, and transmitted to the line. The gain compensation data and phase angle compensation data in complex operation circuit 35 are set at an appropriate data according to the distance between ATU-C and ATU-R.

Even though various advance compensation tables in accordance with various distances can prepare data in more detail, it also leads to the increase in memory capacity and complication in the circuit. However, even when the distance between ATU-C and ATU-R is 3 km, the advance compensation table of 1 km can be used. This way, it is possible to at least have some improvements in the data communication because the amplitude attenuation and phase angel shift at the 1 km communication path are compensated.

The above illustration used an ADSL modem, however, the present invention can be applied to other xDSL modems that are employed by other types of DSLs.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2003-299108 filed on August 22, 2003, entire content of which is expressly incorporated by reference herein.

**Claims**

1. A DSL modem apparatus comprising:

   a controller that executes an initialization sequence, the sequence exchanging a predetermined signal prior to data communication; a multiplier that multiplies transmission data of a sub-carrier by gain compensation data and phase angle compensation data, which are prepared for the same sub-carrier; and a modulator that modulates a plurality of transmission data to be simultaneously transmitted in a plurality of sub-carriers.

2. The DSL modem apparatus according to claim 1, wherein said multiplier multiples only transmission data of a predetermined signal of the initialization sequence, by the gain compensation data and the phase angle compensation data.

3. The DSL modem apparatus according to claim 2, wherein said multiplier multiplies only transmission data of a REVERB signal, by the gain compensation data and the phase angle compensation data, the REVERB signal being initially exchanged during the initialization sequence.

4. The DSL modem apparatus according to claim 1, wherein said multiplier multiples transmission data of all signals, by the gain compensation data and the phase angle compensation data, the signals being exchanged during the initialization sequence.

5. The DSL modem apparatus according to claim 1, wherein said multiplier can use the gain compensation data and the phase angle compensation data that are individually generated corresponding to a plurality of distances.

6. A DSL modem apparatus comprising:

   a controller that executes data communication; a multiplier that multiplies transmission data of a sub-carrier by gain compensation data and phase angle compensation data, which are prepared for the same sub-carrier; and a modulator that modulates a plurality of transmission data to be simultaneously transmitted in a plurality of sub-carriers.

7. The DSL modem apparatus according to claim 6, wherein said multiplier multiples all transmission data, by the gain compensation data and the phase angle compensation data, the transmission data being transmitted during the data communication.

8. The DSL modem apparatus according to claim 6, wherein said multiplier can use the gain compensation data and the phase angle compensation data that are individually generated corresponding to a plurality of distances.

9. A communication control method comprising:

   executing an initialization sequence that exchanges a predetermined signal prior to data communication;
   multiplying transmission data of a sub-carrier by gain compensation data and phase angle compensation data, which are prepared for the same sub-carrier; and
   modulating the multiplication results to be simultaneously transmitted in a plurality of sub-carriers.

10. A communication control method comprising:

   executing data communication;
   multiplying transmission data of a sub-carrier by gain compensation data and phase angle compensation data, which are prepared for the same sub-carrier; and
   modulating a plurality of transmission data to be simultaneously transmitted in a plurality of sub-carriers.

# Fig.1

EP 1 509 017 A2

Fig.2

EP 1 509 017 A2

# Fig.3

advance compensation table in 1km line

gain compensation data

| sub-carrier #0 | #1 | #2 | #3 | #4 | #5 |
|---|---|---|---|---|---|
| 1.5188 | 1.7719 | 1.9713 | 2.1381 | 2.2812 | 2.4060 |
| #6 | #7 | #8 | #9 | . . . . . . . . . . . . . . . . | |
| 2.5161 | 2.6144 | 2.7030 | 2.7838 | . . . . . . . . . . . . . . . . | |

phase angle (radian)compensation data

| sub-carrier #0 | #1 | #2 | #3 | #4 | #5 |
|---|---|---|---|---|---|
| 0.4365 | 0.6393 | 0.8104 | 0.9681 | 1.1188 | 1.2659 |
| #6 | #7 | #8 | #9 | . . . . . . . . . . . . . . . | |
| 1.4111 | 1.5554 | 1.6993 | 1.8432 | . . . . . . . . . . . . . . . | |

gain compensation data

| sub-carrier #246 | #247 | #248 | #249 | #250 | #251 |
|---|---|---|---|---|---|
| 47.0956 | 47.5472 | 48.0027 | 48.4620 | 48.9252 | 49.3923 |
| sub-carrier #252 | #253 | #254 | #255 | | |
| 49.8633 | 50.3383 | 50.8173 | 51.3004 | | |

phase angle (radian)compensation data

| sub-carrier #246 | #247 | #248 | #249 | #250 | #251 |
|---|---|---|---|---|---|
| -2.8967 | -2.7666 | -2.6366 | -2.5066 | -2.3767 | -2.2468 |
| sub-carrier #252 | #253 | #254 | #255 | | |
| -2.1171 | -1.9874 | -1.8577 | -1.7282 | | |

# Fig.4

advance compensation table in 5km line

gain compensation data

| sub-carrier #0 | #1 | #2 | #3 | #4 | #5 |
|---|---|---|---|---|---|
| 8.0816 | 17.4667 | 29.7712 | 44.6828 | 61.7787 | 80.6278 |

| #6 | #7 | #8 | #9 | · · · · · · · · · · · · · · · |
|---|---|---|---|---|
| 100.8498 | 122.1447 | 144.3007 | 167.1900 | · · · · · · · · · · · · · · · |

phase angle (radian)compensation data

| sub-carrier #0 | #1 | #2 | #3 | #4 | #5 |
|---|---|---|---|---|---|
| 2.1827 | -3.0867 | -2.2310 | -1.4429 | -0.6890 | 0.0465 |

| #6 | #7 | #8 | #9 | · · · · · · · · · · · · · · · |
|---|---|---|---|---|
| 0.7725 | 1.4937 | 2.2132 | 2.9327 | · · · · · · · · · · · · · · · |

gain compensation data(unit 10**8) **is power of 10

| sub-carrier #246 | #247 | #248 | #249 | #250 | #251 |
|---|---|---|---|---|---|
| 2.3169 | 2.4301 | 2.5488 | 2.6730 | 2.8033 | 2.9397 |

| sub-carrier #252 | #253 | #254 | #255 | | |
|---|---|---|---|---|---|
| 3.0825 | 3.2322 | 3.3889 | 3.5531 | | |

phase angle (radian)compensation data

| sub-carrier #246 | #247 | #248 | #249 | #250 | #251 |
|---|---|---|---|---|---|
| -1.9174 | -1.2667 | -0.6165 | 0.0334 | 0.6830 | 1.3322 |

| sub-carrier #252 | #253 | #254 | #255 | | |
|---|---|---|---|---|---|
| 1.9810 | 2.6295 | -3.0055 | -2.3577 | | |

# Fig.5

KLOOP(f)*1km

# Fig.6

KLOOP(f)*5km

# Fig.7

gain in 1km line

gain

| sub-carrier #0 | #1 | #2 | #3 | #4 | #5 |
|---|---|---|---|---|---|
| 0.6584 | 0.5644 | 0.5073 | 0.4677 | 0.4384 | 0.4156 |
| #6 | #7 | #8 | #9 | . . . . . . . . . . . . . . . . | |
| 0.3974 | 0.3825 | 0.3700 | 0.3592 | . . . . . . . . . . . . . . . | |

phase angle (radian)

| sub-carrier #0 | #1 | #2 | #3 | #4 | #5 |
|---|---|---|---|---|---|
| -0.4365 | -0.6393 | -0.8104 | -0.9681 | -1.1188 | -1.2659 |
| #6 | #7 | #8 | #9 | . . . . . . . . . . . . . . . | |
| -1.4111 | -1.5554 | -1.6993 | -1.8432 | . . . . . . . . . . . . . . . | |

gain

| sub-carrier #246 | #247 | #248 | #249 | #250 | #251 |
|---|---|---|---|---|---|
| 0.0212 | 0.0210 | 0.0208 | 0.0206 | 0.0204 | 0.0202 |
| sub-carrier #252 | #253 | #254 | #255 | | |
| 0.0201 | 0.0199 | 0.0197 | 0.0195 | | |

phase angle (radian)

| sub-carrier #246 | #247 | #248 | #249 | #250 | #251 |
|---|---|---|---|---|---|
| 2.8967 | 2.7666 | 2.6366 | 2.5066 | 2.3767 | 2.2468 |
| sub-carrier #252 | #253 | #254 | #255 | | |
| 2.1171 | 1.9874 | 1.8577 | 1.7282 | | |

# Fig.8

gain and phase in 5km line

gain

| sub-carrier #0 | #1 | #2 | #3 | #4 | #5 |
|---|---|---|---|---|---|
| 0.1237 | 0.0573 | 0.0336 | 0.0224 | 0.0162 | 0.0124 |
| #6 | #7 | #8 | #9 | · · · · · · · · · · · · · · · |  |
| 0.0099 | 0.0082 | 0.0069 | 0.0060 | · · · · · · · · · · · · · · · |  |

phase angle (radian)

| sub-carrier #0 | #1 | #2 | #3 | #4 | #5 |
|---|---|---|---|---|---|
| -2.1827 | 3.0867 | 2.2310 | 1.4429 | 0.6890 | -0.0465 |
| #6 | #7 | #8 | #9 | · · · · · · · · · · · · · · · |  |
| -0.7725 | -1.4937 | -2.2132 | -2.9327 | · · · · · · · · · · · · · · · |  |

gain(unit 10**(-8)) **is power of 10

| sub-carrier #246 | #247 | #248 | #249 | #250 | #251 |
|---|---|---|---|---|---|
| 0.4316 | 0.4115 | 0.3923 | 0.3741 | 0.3567 | 0.3402 |
| sub-carrier #252 | #253 | #254 | #255 |  |  |
| 0.3244 | 0.3094 | 0.2951 | 0.2814 |  |  |

phase angle (radian)

| sub-carrier #246 | #247 | #248 | #249 | #250 | #251 |
|---|---|---|---|---|---|
| 1.9174 | 1.2667 | 0.6165 | -0.0334 | -0.6830 | -1.3322 |
| sub-carrier #252 | #253 | #254 | #255 |  |  |
| -1.9810 | -2.6295 | 3.0055 | 2.3577 |  |  |

# Fig.9

| C-GALF2 (G.994.1) | C-FLAG2 (G.994.1) |
|---|---|
| C-QUIET2 | |
| If R-ACK2 | If R-ACK1 C-PILOT1A |
| | |
| C-PILOT1 | C-QUIET3A |
| C-REVERB1 | |
| C-PILOT2 | |
| C-ECT | |
| C-REVERB2 | |
| R-ACK2 then C-PILOT3 R-ACK1 then C-QUIET5 | |
| C-REVERB3 | |
| C-SEGUE1 | |
| C-RATES1/C-CRC1 C-MSG1/C-CRC2 | |
| C-MEDLEY | |

| R-GALF2 (G.994.1) | R-FLAG2 (G.994.1) |
|---|---|
| R-QUIET2 | |
| | |
| R-REVERB1 | |
| R-QUIET3 | |
| R-ECT | |
| R-REVERB2 | |
| R-SEGUE1 | |
| R-REVERB3 | |
| | |
| R-SEGUE2 | |
| R-RATES1/R-CRC1 R-MSG1/R-CRC2 | |
| R-MEDLEY | |

# Fig.10

35

26

$\left(\begin{array}{l} \text{REVERB signal} \\ \text{(complex number)} \end{array}\right)$ → complex operation circuit → IFFT unit → circuit